# EUROPÄISCHE PATENTSCHRIFT

(11) **EP 1 755 852 B1**
(45) Veröffentlichungstag und Bekanntmachung des Hinweises auf die Patenterteilung: **23.02.2011**
(21) Anmeldenummer: 05753020.6
(22) Anmeldetag: 14.06.2005
(51) Int. Cl.: B29C 44/34, B29C 44/60, B29C 44/12

(54) **VERFAHREN UND VORRICHTUNG ZUR HERSTELLUNG HINTERSCHÄUMTER LUFTDURCHLÄSSIGER TEXTILER PRODUKTE**
METHOD AND DEVICE FOR THE PRODUCTION OF BACK-FOAMED AIR-PERMEABLE TEXTILE PRODUCTS
PROCEDE ET DISPOSITIF DE PRODUCTION DE PRODUITS TEXTILES PERMEABLES A L'AIR ET RENFORCES PAR MOUSSAGE

(30) Priorität: 15.06.2004 DE 102004028803
(43) Veröffentlichungstag der Anmeldung: 28.02.2007
(73) Patentinhaber: International Automotive Components Group GmbH, 47804 Krefeld (DE)
(72) Erfinder: FRESER-WOLZENBURG, Thomas, c/o Stankiewicz GmbH, 29352 Adelheidsdorf (DE)
(74) Vertreter: Liesegang, Eva
(86) Internationale Anmeldenummer: PCT/EP2005/006360
(87) Internationale Veröffentlichungsnummer: WO 2005/123360

(56) Entgegenhaltungen:
- DE-A1- 10 258 546
- FR-A- 2 634 157
- US-A- 4 976 414
- DATABASE WPI Section Ch, Week 199251 Derwent Publications Ltd., London, GB; Class A32, AN 1992-418722 XP002341224 & JP 04 312811 A (TOYOTA JIDOSHA KK) 4. November 1992 (1992-11-04)

## Beschreibung

Die Erfindung betrifft ein Verfahren und eine Vorrichtung zur Herstellung hinterschäumter luftdurchlässiger textiler Produkte, wie hinterschäumter Teppichteile als Bodenverkleidung von Kraftfahrzeugen, Sitzpolster, Kopfstützen und dergleichen, sowie ein solches hinterschäumtes luftdurchlässiges textiles Produkt.

Die erwähnten Produkte sind typische Vertreter solcher luftdurchlässiger textiler Produkte, die auf der einer Nutz- bzw. Sichtseite abgewandten Rückseite zu hinterschäumen sind.

Bei Bodenverkleidungen eines Kraftfahrzeugs dient das hinterschäumte Teppichteil nicht nur zum Ausgleich von Unebenheiten eines Fahrzeugbodens gegenüber der gewünschten Flächenausbildung im Fahrzeuginnenraum sondern auch zur Aufnahme von Leitungen und zur Dämmung und Dämpfung von unerwünschten Geräuschen. Bei dem Teppichteil handelt es sich um ein luftdurchlässiges textiles Produkt, in der Regel ein Teppichflor, der in einem textilen, luftdurchlässigen Teppichträger getuftet ist.

Bei Sitzpolstern, Kopfstützen und dergleichen wiederum dient die Hinterschäumung des textilen Produktes, im allgemeinen eines Stoffes, dazu, dem Sitzpolster bzw. der Kopfstütze eine gewünschte, die Sitzhaltung verbessernde Form zu geben. Hier sind akustische Wirkungen relativ untergeordnet, vielmehr ist es wichtig, dass darüber hinaus ein sehr guter Klimakomfort erzielt wird. Hierunter versteht man die Eigenschaft, dass Luft durch das textile Produkt auch im hinterschäumten Zustand zirkulieren kann, wodurch Luftfeuchtigkeit transportiert werden kann und in einfacher Weise auch Luft zirkulieren kann, um hinsichtlich Umgebungstemperatur und Umgebungsfeuchte einen schnellen Ausgleich zu erhalten, insbesondere auch dann, wenn eine Person das Sitzpolster oder die Kopfstütze nutzt.

Typisch wird zur Herstellung herkömmlich das luftdurchlässige textile Produkt, beispielsweise ein Teppichteil-Zuschnitt, etc., in eine Form mit der Nutz- bzw. Sichtseite an eine Formhälfte anliegend eingelegt. Anschließend wird die Form geschlossen und erfolgt ein Einspritzen des Reaktionsproduktes zur Bildung des die Hinterschäumung bildenden Schaums, wie eines Polyurethanschaums. Bei der Reaktion der Reaktionsprodukte entsteht ein relativ hoher Druck. Nachdem das textile Produkt luftdurchlässig ist, üblicherweise handelt es sich um Gestrick, ein Gewirk oder dergleichen mit hoher Porigkeit, kann durchs Wirkung con Kapillarkräften zumindest eines der Reaktionsprodukte, möglicherweise alle, durch diese Poren oder Gewebeöffnungen zur Sichtseite des textilen Produktes gelangen und dort vorgesehene Teile verkleben. Auch sich bildender Schaum kann durch diese Poren hindurchtreten. Dies ist in höchstem Masse unerwünscht. Hinterschäumte textile Produkte bei denen die Sichtseite Verklebungen aufweist oder bei denen der Schaum zur Sichtseite durchgeschlagen hat, sind unverkäuflich.

Zur Überwindung dieses Problems wird bei einem bekannten Verfahren zur Herstellung von Bodenverkleidungen als akustisch wirksames Bauteil (DE 38 09 980 C2) eine Folie an der Rückseite des Teppichteils vorgesehen. Auch geschlossenzellige dünne Schaumlagen sind schon vorgeschlagen worden. Das bekannte Vorsehen einer Folie ist dem Erreichen eines Klimakomforts kontraproduktiv, da es die Luftzirkulation verhindert. Eine solche luftundurchlässige Folie ist darüber hinaus ungünstig im Hinblick auf die akustischen Eigenschaften.

Aus DE 691 13 137 T2 ist es bekannt, eine solche Folie nach der Beendigung der Herstellung des hinterschäumten Produktes durch zusätzliche Massnahmen, Wärmeinwirkung kombiniert mit Unterdruckerzeugung, zumindest teilweise zu zerstören. Die hier erforderlichen zusätzlichen Verfahrensschritte sind offensichtlich sehr kostspielig und aufwändig, wobei die vollständige, bzw. gleichmässige Entfernung oder Lochung der Folie nicht reproduzierbar gewährleistet werden kann. Verbleibende Reste der Folie haben nachteiligen Einfluss auf den Strömungswiderstand an den jeweiligen Stellen. Diese Vorgehensweise ist demnach insbesondere für Serienfertigung nicht besonders geeignet.

JP-A-4 312 811 offenbart ein Verfahren gemäß dem Oberbegriff des Anspruchs 1.

FR-A-2 634 157 offenbart ein Vorrichtung gemäß dem Oberbegriff des Anspruchs 6 und ein Produkt gemäß dem Oberbegriff des Anspruchs 5.

Es ist daher Aufgabe der Erfindung, ein Verfahren und eine Vorrichtung zur Herstellung hinterschäumter luftdurchlässiger textiler Produkte anzugeben, mit dem das Durchdringen von Reaktionsprodukten bzw. Schaum zur Sichtseite sicher vermieden werden kann, ohne das Vorsehen von Folien oder dergleichen zu erfordern.

Die Aufgabe wird durch die Merkmale des Anspruchs 1 bzw. des Anspruchs 6 gelöst.

Die Erfindung wird durch die Merkmale der Unteransprüche weitergebildet.
Ein hinterschäumtes luftdurchlässiges textiles Produkt ist durch die Merkmale des Anspruchs 5 gekennzeichnet.
Die Erfindung geht dabei von der überraschenden Erkenntnis aus, dass die in DE-A-10258546 angegebene Massnahme, mit der lunkerfreie Teile in kurzen Taktzeiten bei der Herstellung geschäumter Polyurethan-Formkörper erreicht werden können, derart weitergebildet werden kann, dass der Druckabbau des bei der Reaktion der Reaktionsprodukte entstehenden Druckes so geregelt werden kann, dass trotz der Erreichung der erwünschten Hinterschäumung weder eines der Reaktionsprodukte noch entstehender Schaum zur Sichtseite des textilen Produktes durchdringen kann.

Wichtige Parameter sind der bei der Reaktion der Reaktionsprodukte im Inneren der Form entstehende Druck und auch die dem textilen Produkt bzw. dessen Aufbau eigene Kapillarkraft-Wirkung. Beide Parameter können über ihren zeitlichen Verlauf, beginnend mit dem Einspritzen der Reaktionsprodukte hinreichend bestimmt werden, um den zeitlichen Verlauf des dem Hindurchdringen entgegenwirkenden Druckabbaus in der Form zu bestimmen. In entsprechender Weise wird ein mindestens einer Expansionsöffnung zugeordnetes Ventil zur Öffnung zu einer Unterdruckkammer hin, geregelt. Gegen Ende des Hinterschäumungsprozesses wird nahtlos zu dem Verfahren gemäß der älteren Anmeldung übergegangen, derart, dass die Rückseiten der hinterschäumten Produkte, zumindest weitgehend, lunkerfrei sind. Entsprechend kann auch die Vorrichtung gemäß der älteren Anmeldung weitgehend genutzt werden, dadurch, dass das dort geschilderte Vierwege-Ventil eine Anordnung ist, bei der ein in seinem Öffnungsgrad steuerbares Ventil geregelt zu einer Unterdruckquelle wie einer Unterdruckkammer geöffnet werden kann. Das in der älteren Anmeldung genannte Nadelventil, das das Eintreten von Schaum in die Expansionsöffnung und damit die Bildung von Lunkern verhindert, kann unverändert beibehalten werden.

Die Erfindung wird durch das anhand der Zeichnungen dargestellten Ausfühungsbeispiels näher erläutert. Es zeigen
Fig. 1 schematisch und im Längsschnitt eine Vorrichtung zur Steuerung des Verfahrensablaufes in einer Form gemäss einer Ausführungsform der Erfindung,
Fig. 2 schematisch und im Längsschnitt eine mit mehreren Expansionsöffnungen und einer gemeinsamen Unter- bzw. Überdruckversorgung ausgestattete Vorrichtung gemäß einer anderen Ausführungsform der Erfindung,
Fig. 3 schematisch im Schnitt ein über einen Drucksensor ansteuerbares Nadelventil zur Verwendung bei der vorliegenden Erfindung,
Fig. 4 den typischen Verlauf von Druck und Ventilöffnungsgrad über die Zeit.

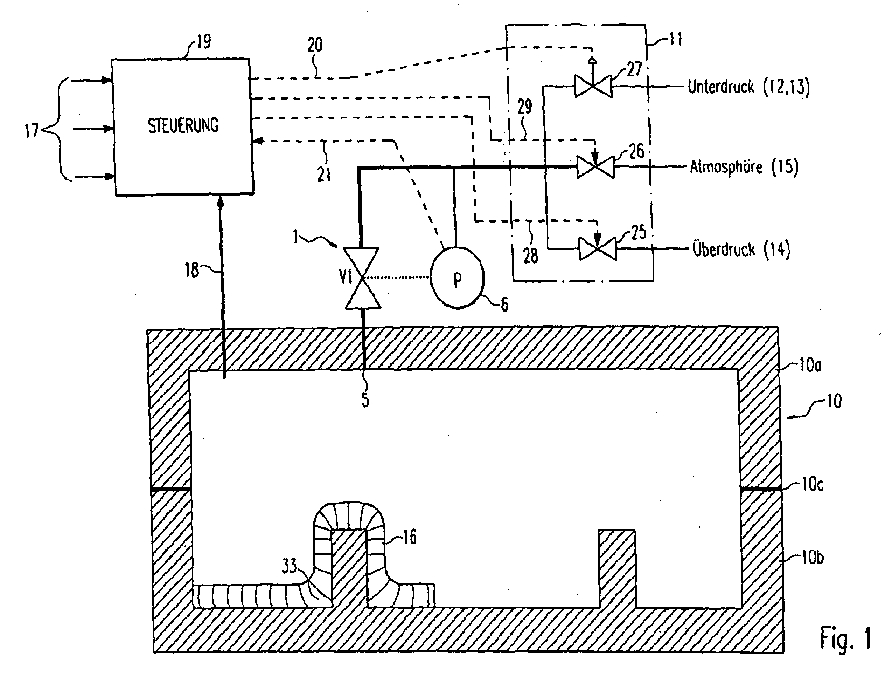

Figur 1 zeigt eine bevorzugte Ausführungsform für eine Vorrichtung zur Durchführung des Verfahrens gemäß der Erfindung. Man erkennt eine Form 10 mit einer oberen Formhälfte 10a und einer unteren Formhälfte 10b. Beide Formhälften 10a, 10b sind durch eine Formtrennebene 10c voneinander getrennt. Die Formebene 10c weist vorzugsweise eine Vakuumdichtung auf. Bei elastische verformten textilen Produkten kann die Dichtwirkung auch durch das zu hinterschäumende textile Produkt selbst erreicht werden. Weiterhin ist eine in der oberen Formhälfte 10a ausgebildete Expansionsöffnung 5 mit einem darin angeordneten Nadelventil 1 vorgesehen. Das Nadelventil 1 ist über eine schematisch als Vierwege-Ventil 11 bezeichnete Ventilanordnung sowohl mit einer Unter- und einer Überdruckquelle (nicht im Einzelnen dargestellt) als auch mit Atmosphäre verbunden. Diese Anordnung erlaubt es nicht nur, das Absaugen während des Expansionsprozesses freigesetzter Gase über das Nadelventil 1 vorzunehmen, sondern auch noch das Evakuieren oder das Belüften der Form 10 sowie die Beaufschlagung, mit Überdruck. Das Ausgangssignal eines Drucksensors 6 dient zur Steuerung des Ventilantriebs 7 des Nadelventils 1 sowie vorzugsweise zur erfindungsgemäßen Regelung des Innendrucks der Form 10 während des Expansionsvorgangs, wie das weiter unten erläutert wird.. Bei einem durch in das Nadelventil 1 eindringendes Polyurethan ausgelösten Druckabfall wird die Ventilnadel 3 nach unten ausgefahren und das Ventil 1 geschlossen, wobei bereits eingedrungenes Polyurethan wieder ausgestoßen wird.

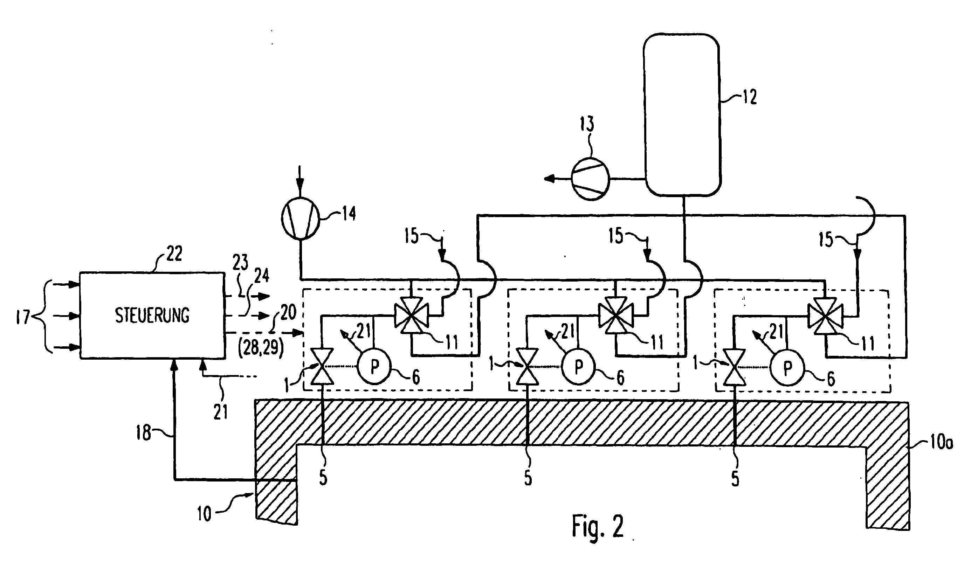

In Figur 2 ist die Anbindung mehrerer solcher Ventile 1 an eine gemeinsame Medienversorgung schematisch dargestellt. Die Anordnung mehrerer Ventile kann bei flächig sehr ausgedehnten Formen sinnvoll oder sogar notwendig sein, um den Druckverlust bei langen Fließwegen durch individuelle Unterdruckeinstellung an den Ventilen 1 zu kompensieren. Eine weitere Einsatzmöglichkeit sind Formen mit komplexer geometrischer Gestalt, insbesondere mit mehreren Stellen maximaler Höhe, um hier die Lunkerbildung zu vermeiden. Weitere Einsatzmöglichkeiten sind denkbar.

Gemäß Figur 2 sind mehrere Nadelventile 1 mit jeweiligen Drucksensoren 6 in der oberen Formhälfte 10a der Form 10 angeordnet. Die Nadelventile 1 sind jeweils über ein Vierwege-Ventil 11 an gemeinsame Versorgungsleitungen zu einer Unterdruckquelle bzw. zu einer Überdruckquelle 14 angeschlossen. Die Unterdruckquelle besteht hier aus einem Vakuumkessel 12, der mittels einer Vakuumpumpe 13 evakuierbar ist. Darüber hinaus weist jedes Vierwege-Ventil 11 noch einen Ausgang 15 zur Atmosphäre auf. Das Vierwege-Ventil 11 ist vorteilhaft durch eine Anordnung (vgl. Fig. 1) aus einem Zweistellungs-Ventil 25 zur Überdruckquelle 14, einem Zweistellungs-Ventil 26 zur Atmosphäre 15 und einem Regelventil 27 zur Unterdruckquelle 12, 13 gebildet. Das Regelventil 27 ist vorzugsweise ein Porportionalventil, um trotz gemeinsamer Medienversorgung noch eine individuelle Einstellung des Unterdrucks an jedem einzelnen Ventil 1 bzw. jeder Expansionsöffnung 5 zu ermöglichen.

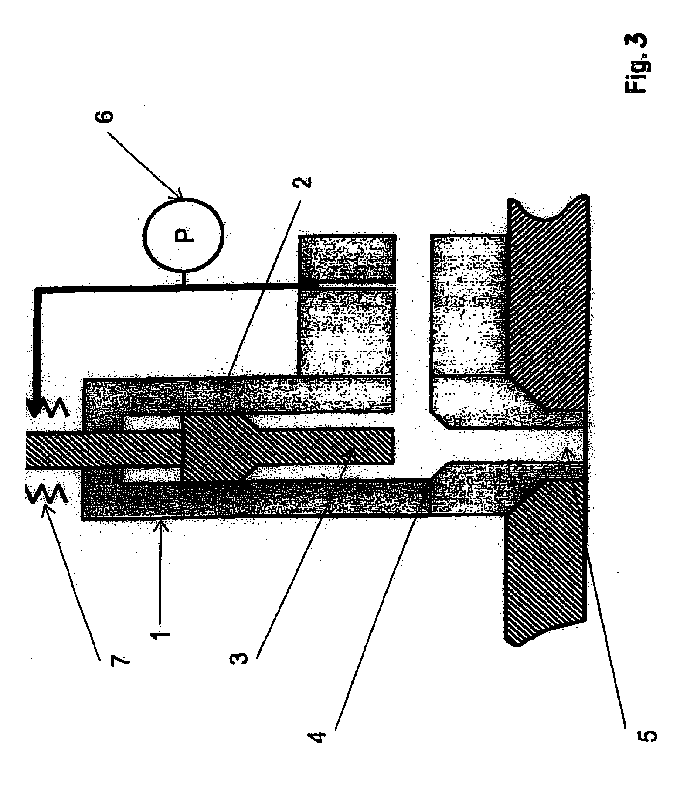

In Figur 3 ist schematisch ein Nadelventil 1 dargestellt. Das Nadelventil 1 umfasst im wesentlichen ein Gehäuse 2, eine Ventilnadel 3 und einen Ventilsitz 4 sowie eine Kapillare als Expansionsöffnung 5 der Form. Weiterhin ist ein Drucksensor 6 unmittelbar zugeordnet. Sobald eine Schaumfront in die Ventil-Kapillare bzw. die Expansionsöffnung 5 eindringt, fällt der Druck in der Kapillare steil ab. Dieser Druckabfall wird von dem Drucksensor 6 detektiert und über eine in den Figuren nicht dargestellte Steuereinheit in ein Steuersignal für einen Ventilantrieb 7 umgesetzt. Dieses Steuersignal bewirkt, dass die Ventilnadel 3 (in der Figur) nach unten fährt und das Ventil 1 schließt. Das in die Kapillare 5 bereits eingedrungene Polyurethan wird dabei durch die Ventilnadel 3 ausgestoßen. Zweckmäßig ist die Stirnseite der Ventilnadel 3 so ausgebildet, dass sie dies Polyurethan rückstandsfrei abschabt und im ausgefahrenen Zustand die Expansionsöffnung 5 bündig mit der Form abschließt.

Es ist an sich bekannt, geschäumte Polyurethan-Formkörper durch Einfüllen einer expandierbaren Polyurethan-Reaktivmischung in eine durch ein Formtrennebene geteilte Form und Evakuieren der Form über einen in der Formtrennebene umlaufenden Vakuumkanal herzustellen. Hierzu hat es bereits eine Reihe von Vorschlägen gegeben; siehe z. B. DE-OS 15 04 278, DE 30 20 793 A1, EP 0 023 749 A1 und DE 197 01 728 C2. Die Evakuierung der Form ist insbesondere erforderlich, um das in der Form befindliche Gas zur Vermeidung der Lunkerbildung aus der Form zu entfernen. Damit dies gelingt, ist es erforderlich, die Formhälften so zu gestalten, dass die Formtrennebene im höchsten Punkt des Formhohlraums liegt, da sich anderenfalls ein Nest bildet, aus dem das vorhandene Gas nicht mehr abgezogen werden kann. Dem könnte dadurch begegnet werden, dass das Formnest auf einen sehr niedrigen Druck von unterhalb 100 mbar, insbesondere unterhalb 50 mbar, vor dem Aufsteigen des Schaums, d.h. bevor die Höhe des Schaums im Formnest die Formtrennebene überschreitet, evakuiert wird. Ein solch niedriger Druck im Formnest führt aber dazu, dass der Schaum anfänglich schnell und stark expandiert, bevor noch wesentliche Treibmittelgehalte freigesetzt sind, so dass nur eine unregelmäßige Schaumstruktur entsteht.

Die Eigenschaften von Polyurethanschaum sind wesentlich durch die Dichte des fertigen Schaums und die Materialeigenschaften der Matrix bestimmt. Insbesondere wenn Wasser als chemisches Treibmittel eingesetzt wird, wobei durch die Reaktion des Wassers mit dem Isocyanat Kohlendioxid freigesetzt wird, ist eine genaue Abstimmung der Rezeptur der expandierbaren Polyurethan-Reaktivmischung zur Einstellung der Matrix-Eigenschaften erforderlich. Grundsätzlich ist es wünschenswert, mit einer einzigen Rezeptur Schäume mit unterschiedlichen Rohdichten herstellen zu können. Zur Steuerung der Dichte eines Schaums bei gleichzeitiger Beibehaltung der Rezeptur, insbesondere des Treibmittelgehaltes, ist eine Steuerung des Druckes in der Schäum-Form hervorragend geeignet, siehe z. B. EP 0 023 749 A1, EP 0 044 226 A1 und DE 197 01 728 C2.
Für die Erfindung ist wesentlich die Möglichkeit einer Prozessregelung über die Ventile 1 und 27. Während bei bekannten Verfahren ein Eingriff in den Expansionsprozess nicht vorgesehen und auch nicht möglich ist, sind bei dem erfindungsgemäßen Verfahren über die Möglichkeit, die Ventile 27 nach Wahl gezielt ansteuern zu können, der Druck nicht nur in Abhängigkeit von der Rezeptur der Reaktivmischung einstellbar. Erfindungsgemäß erfolgt eine Regelung des Absaugdrucks während des Expansionsprozesses, dabei ist die Einstellung unterschiedlicher Absaugleistungen beim Einsatz mehrerer für die Expansionssteuerung herangezogener. Ventile bei räumlich ausgedehnten Formen (vgl. Fig. 2) möglich.

Die Herstellung von Polyurethanschaum, aber auch anderer Schäume, ist an sich bekannt. Das erfindungsgemäße Verfahren ist universell einsetzbar. So kann das Einfüllen der Reaktivmischung sowohl in die offene als auch in die geschlossene Form erfolgen, wobei der Schäumvorgang ohne Beschränkung der Allgemeinheit sowohl durch die Beladung mit Kohlendioxid oder einem anderen Treibgas, wie zum Beispiel Luft, Stickstoff etc., als auch mit herkömmlichen Treibmitteln, wie zum Beispiel Wasser oder einer Kombination von Treibmitteln ausgelöst werden kann. Je nach Verfahrensvariante kann dann die Evakuierung der Form über die Unterdruck-Regelventile 27 auf einen Unterdruck von minimal 300 mbar erfolgen.

Nach dem Aufschäumen und Abbinden der Reaktivmischung wird schließlich die Form in an sich bekannter Weise gesteuert belüftet und geöffnet und wird das Formteil ggf. mit Unterstützung durch Druckluft über das Ventil 25 ausgeworfen.

Ferner kann nicht nur das Absaugen der freigesetzten Gase während des Expansionsprozesses, sondern auch noch die Evakuierung der Form ebenfalls über diese Ventile 1 und 27 erfolgen. Damit entfällt die Notwendigkeit einer zusätzlichen Absaugöffnung wie auch der Evakuierung über die Formtrennebene. Da die Abdichtung der Expansionsöffnung vorzugsweise nicht über die Aushärtung eines Schaumpropfens in dem Absaugkanal erfolgt, woraus ein maximal möglicher Durchmesser für den Kanal bzw. die Kapillare resultiert, da andernfalls das Polyurethan zu weit in das Unterdrucksystem eindringen würde, bevor es aushärtet, sondern einfach durch Schließen des Nadelventils 1, können die geometrischen Abmessungen der Kapillare ohne weiteres an diese Zusatzfunktion angepasst werden.

Bevorzugt werden Kapillardurchmesser zwischen 0,2mm und 2mm. Wird der Kapillardurchmesser kleiner als 0,2mm gewählt, sinkt der Volumenstrom an Reaktionsgasen, der durch die Kapillare abgeführt werden kann stark ab, da der Druckverlust umgekehrt proportional zum Kapillardurchmesser ist. Dadurch erhöht sich entweder die Taktzeit oder es wird eine höhere Anzahl an Ventilen benötigt. Wird er dagegen größer als 2mm gewählt, wird aufgrund des geringen Druckverlustes die Erfassung der für die Schließung des Ventils 1 bestimmenden Änderung der Durchströmung der Kapillare beim Eindringen des Schaums erschwert. Der Ausgleich über die Verlägerung der Kapillare (der Druckverlust nach Hagen-Poiseuille ist proportional 1/d (= Länge zu Durchmesser der Kapillare) hat erheblichen Einfluss auf die Baugröße, die im Sinne der Montagemöglichkeiten an bzw. in der Form klein zu halten ist. Wie in der genannten älteren Anmeldung ausgeführt wird zur Steuerung des Nadelventils 1 eine sich mit Eintritt der Schaumfront in die Ventilkapillare rasch ändernde chemische und/oder physikalischen Größe erfasst und wird das Nadelventil 1 in Abhängigkeit von dem zeitlichen Verlauf dieser Größe gesteuert. Diese Art der Ansteuerung hat den Vorteil, dass das Ventil beim Eindringen der Schaumfront in die Kapillare sofort autark schließt.

Vorzugsweise wird als Steuergröße der zeitliche Druckverlauf in der Ventilkapillare erfasst, wobei die Steuerung so ausgelegt ist, dass das Ventil 1 durch den beim Eindringen der Schaumfront in die Ventilkapillare auftretenden Druckabfall in der Kapillare sofort schließt. Nach dem Gesetz von Hagen-Poiseuille ist der Druckverlust in der Kapillare von der Viskosität des durchströmenden Mediums abhängig. Beim Eindringen der Schaumfront steigt der Druckverlust aufgrund des Unterschieds der Viskosität von Polyurethan gegenüber der von Luft etwa um einen Faktor 10⁵-10⁶. Zur Druckerfassung kann wie erwähnt in der Kapillare ein Drucksensor vorgesehen sein, dessen Ausgangssignal einer Steuereinheit zugeführt und durch die Steuereinheit in ein Steuersignal für die Bewegung der Ventilnadel 3 umgesetzt wird. Als Drucksensoren sind beispielsweise an sich bekannte Piezo-Drucksensoren geeignet.

Eine weitere Größe zur Steuerung des Ventils 1 im obigen Sinne kann beispielsweise auch die Durchflussmenge durch die Ventilkapillare sein, die aus den gleichen Gründen wie oben beschrieben beim Eindringen der Schaumfront in die Kapillare um einen vergleichbare Faktor abfällt. Das erfindungsgemäße Verfahren ist jedoch nicht auf diese beispielhaft aufgeführten, besonders geeigneten Steuergrößen beschränkt. So kann die Luftströmung in der Kapillare bzw. in der Verstreckungsleitung zum Ventil 27, der CO₂-Gehalt im strömenden Gas oder eine andere sich im Verlauf der Reaktion erfassbar ändernde Größe herangezogen werden.

Bevorzugt werden die Ventile 1, 11 zusätzlich zum Belüften der Form 10 und/oder zum Beaufschlagen der Form 10 mit Druckluft zur Entnahmeunterstützung genutzt. Auch hierdurch verringert sich die Anzahl der Bauteile, was Kostenvorteile mit sich bringt. Jedoch können diese Wirkungen auch in anderer Weise erreicht werden.

Wesentlich für das vorliegende erfindungsgemäße Verfahren ist, dass das Regelventil 27 gezielt mit Unterdruck derart verbunden wird, dass weder (noch flüssige) eingespritzte Reaktionsprodukte noch bei der Reaktion entstehender Schaum durch das luftdurchlässige textile Produkt beispielsweise ein in Fig. 1 schematisch angedeuteter Teppichflor 16 hindurchtreten kann.

Die typischen Reaktionseigenschaften des Reaktionsproduktes über die Zeit sind als Parameter 17 grundsätzlich bekannt oder vorab ermittelbar. Besondere Ist-Größen 18 der Vorgänge in der Form 10, beispielsweise der Beginn des Einspritzvorganges der Reaktionsprodukte, sind als physikalische Größe erfassbar. Als besondere Ist-Größe 21 ist der durch den Drucksensor 6 erfasste Druck an der Expansionsöffnung 5 gesondert dargestellt. Diese Ist-Größe 21 stellt die sich im Verlauf der Reaktion erfassbar ändernde Größe dar. Diese Parameter 17 und die Ist-Größen 18 und 21 werden einer Steuerung 19 zugeführt, die ein Steuersignal 20 abhängig davon ermittelt und an das Regelventil 27 abgibt und dieses somit abhängig von den Parametern 17 und den Ist-Größen 18, 21 gezielt mit Unterdruck verbindet. Die Steuerung 19 ermittelt zusätzliche Stellsignale 28 und 29 für die Zweistellungsventile 25 bzw. 26 aufgrund der Parameter 17 und der Ist-Signale 18.

Bei der Variante gemäß Figur 2 sind mehrere Vierwege-Ventile 11 mit gemeinsamen Quellen für Überdruck(14) und Unterdruck (12, 13) verbunden und weisen jeweilige Öffnungen zur Atmosphäre (15) auf. Die zugeordnete Steuerung 22, die ebenfalls Parameter 17 und Ist-Größen 18 sowie 21 erhält, arbeitet im Wesentlichen ähnlich der Anordnungen gemäß Fig. 1. Allerdings kann es erforderlich sein, je nach Lage der jeweiligen Expansionsöffnungen die entsprechenden Signale 20 bzw. 23, 24 so unterschiedlich zu erzeugen, dass die jeweiligen Regelventile (27) der Vierwege-Ventile 11 jeweils gezielt zu dem erwünschten Effekt beitragen.

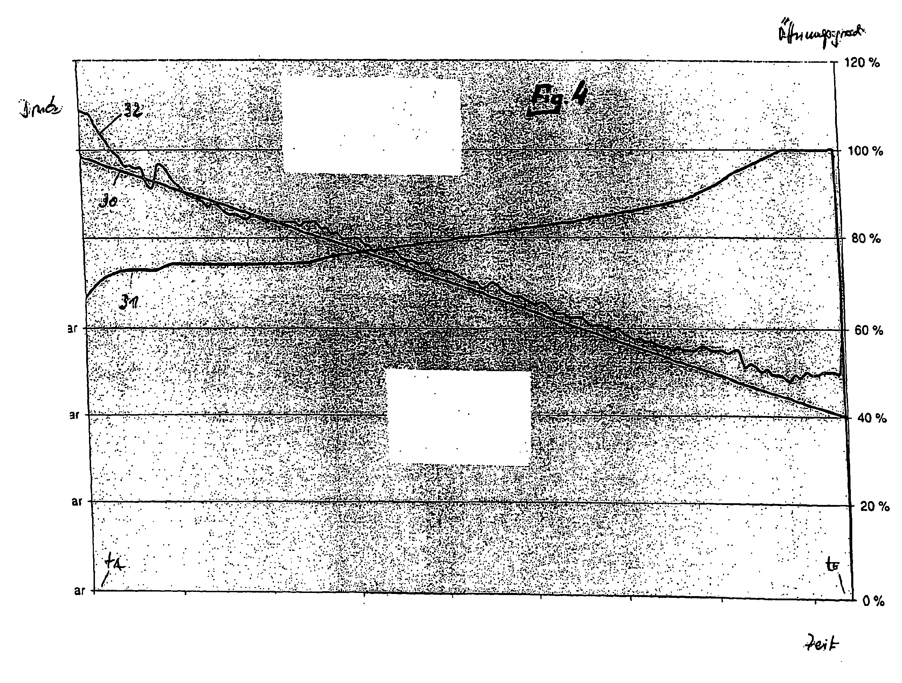

Die typische Abhängigkeit des Öffnungsgrades eines Regelventils 27 von dem Reaktionsverlauf in der Form über die Zeit t, symbolisiert durch einen typischen gewünschten Verlauf des durch einen Drucksensor 6 erfassten Drucks ist in Fig. 4 gezeigt: Kurve 30 zeigt den erwünschten Fall-Verlauf des Drucks in der Form 10 bzw. am Drucksensor 6 von Beginn der Reaktion (Zeit t_{A}) bis zu deren Ende (Zeit t_{E}) und Kurve 31 davon abhängig den mittels des Steuersignals erreichten Öffnungsgrad des Regelventils 27. Der tatsächliche Verlauf des Drucks aufgrund einer erfindungsgemäßen Regelung ist durch die Kurve 32 dargestellt. Typisch beträgt die Schaumbildungszeit (t_{E} - t_{A}) 20 bis 60s. Am Ende, Zeit t_{E}, schließt das Nadelventil 1, wie erwähnt und steigt der Druck (Kurve 32) kurzzeitig stark an. Durch Ansteuern der Ventile- 25 und 26. und Öffnen der Form 10 ist ein Produktionszyklus dann abgeschlossen. Typische Werte für den Druck zu Beginn (t_{A}) liegen in der Größenordnung von 1000 mbar und zum Ende (t_{E}) bei 700 mbar, eine Druckänderung über die Zeit in der Größenordnung von etwa 1 bis 20 mbar/s ist anzustreben.

Gemäß einer besonderen Weiterbildung kann der Verlauf der die Regelventile 27 steuernden Signale 20 (bzw. 23, 24) gezielt zusätzlich so gesteuert werden, dass zu einem geeigneten Zeitpunkt Luft im Bereich 33 (Fig. 1) zwischen textilem Produkt, nämlich Teppichflor 16, und der Innenweite der zugewandten, hier unteren, Formhälfte 10b durch das textile Produkt hindurch derart abgesaugt wird, dass in dem dort befindlichen Schaum bereits gebildete Zellen zusätzlich geöffnet werden. Aufgrund des nur geringen Luftstroms wird dies auch nur in sehr geringem Umfang erfolgen, jedoch erfolgt hier ein zusätzlicher Beitrag in Hinsicht auf die gewünschte Klimatisierung und die erwünschte akustische Wirksamkeit.

Ein derart hergestelltes hinterschäumendes luftdurchlässiges textiles Produkt weist hohen Klimakomfort und hohe akustische Wirksamkeit bei einfacher Herstellarbeit auf.

## Patentansprüche

1. Verfahren zur Herstellung hinterschäumter, luftdurchlässiger Produkte, wie hinterschäumter Teppichteile als Bodenverkleidung eines Kraftfahrzeugs, Sitzpolster, Kopfstützen oder dergleichen, mit den Schritten
Einlegen eines textilen Produkts in eine Form (10),
Schließen der Form (10) und Einspritzen der Reaktionsprodukte zur Bildung des Schaums,
Reagierenlassen der Reaktionsprodukte unter gleichzeitigem Druckabbau des bei der Reaktion entstehenden Druckes über mindestens eine Expansionsöffnung (5) in der dem eingelegtem Produkt abgewandten Formhälfte der Form (10), derart
dass sowohl keines der Reaktionsprodukte als auch nicht der durch die Reaktion der Reaktionsprodukte entstehende Schaum das textile Produkt durchdringt,
**dadurch gekennzeichnet, dass** das textile Produkt frei von der Zwischenlage einer Folie oder dergleichen dicht an der Rückseite des textilen Produktes eingelegt wird, wobei der Druckabbau so geregelt wird, dass der Öffnungsgrad eines der Expansionsöffnung (5) zugeordneten Ventils (27) zu einer Unterdruckquelle (12, 13) hin geregelt wird.

2. Verfahren nach Anspruch 1, **dadurch gekennzeichnet, dass** der Öffnungsgrad des der Expansionsöffnung (5) zugeordneten Ventils (27) abhängig von dem Reaktionsverlauf der Reaktion in der Form (10) geregelt wird.

3. Verfahren nach Anspruch 2, **dadurch gekennzeichnet, dass** der Verlauf des Drucks an der Expansionsöffnung (5) erfasst und der Öffnungsgrad abhängig hiervon und Zurückrichtung produkttypischer Parameter, insbesondere der Kapillarkräfte der Bestandteile des textilen Produktes, geregelt wird.

4. Verfahren nach einem der vorangegangenen Ansprüche, **dadurch gekennzeichnet, dass** nach Beginn der Schaumbildung an der Rückseite des in die Form (10) eingelegten textilen Produktes der Druckabbau ferner so geregelt wird, dass im Bereich der Nutz- bzw. Sichtseite des textilen Produktes in der Form (10) vorhandene Luft (25) durch das textile Produkt hindurch unter Öffnen von Zellen in dem dort bereits gebildeten Schaum abgesaugt wird.

5. Hinterschäumtes, luftdurchlässiges Produkt, wie ein hinterschäumtes Teppichteil als Bodenverkleidung eines Kraftfahrzeuges, Sitzpolster, Kopfstütze oder dergleichen, bei dem die Zellen des Schaums frei von der Zwischenlage einer Folie oder dergleichen dicht an der Rückseite eines textilen Produktes anhaften ohne dass der Schaum dieses durchdringt,
**dadurch gekennzeichnet, dass** die Zellen unmittelbar im Anschluss an die Rückseite des textilen Produktes in größerem Maße geöffnet sind, als die sich daran anschließenden Zellen des Schaums.

6. Vorrichtung zur Herstellung hinterschäumter, luftdurchlässiger Produkte, wie hinterschäumter Teppichteile als Bodenverkleidung eines Kraftfahrzeugs, Sitzpolster, Kopfstützen oder dergleichen, mit einer Form (10) mit einem oberen Formbereich (10a) sowie mit mindestens einer Expansionsöffnung (5) an einer vorgegebenen Stelle im oberen Abschnitt des oberen Formbereichs (10a), **gekennzeichnet dadurch, dass** jeder Expansionsöffnung (5) ein Regelventil (27) zugeordnet ist, das eine regelbare Verbindung zu einer Unterdruckquelle (12,13) herstellt, und dass eine Steuerung (19; 22) dazu eingerichtet ist, abhängig von Produkt-Parametern (17) und erfassten Ist-Größen (18,21) das wenigstens eine Regelventil (27) zur Durchführung des Verfahrens nach einem der Ansprüche 1 bis 4 anzusteuern.

7. Vorrichtung nach Anspruch 6, **dadurch gekennzeichnet, dass** mehrere Expansionsöffnungen (5) an gezielten Stellen der Form (10) vorgesehen sind, deren jeder ein Regelventil (27) zugeordnet ist, wobei jedes Regelventil (27) aus einer gemeinsamen Medienversorgung mit Unterdruck versorgbar ist und wobei jedes der Regelventile (27) individuell ansteuerbar ist.

8. Vorrichtung nach einem der Ansprüche 6 bis 7, **dadurch gekennzeichnet, dass** die Expansionsöffnung (5) als eine Kapillare ausgebildet ist, die ein Nadelventil (1) enthält, das die Expansionsöffnung (5) schließt, wenn der Schaum die Expansionsöffnung (5) erreicht.

9. Vorrichtung nach einem der Ansprüche 6 bis 8, **dadurch gekennzeichnet, dass** ein Drucksensor (6) den Druck an der Expansionsöffnung (5) erfasst, dessen Verlauf als erfassbare Ist-Größe (21) zur Regelung des Druckabbaus, und gegebenenfalls auch zum Schließen des Nadelventils (1), herangezogen wird

## Claims

1. Method for producing back-foamed air-permeable products such as back-foamed mats as a floor covering for a motor vehicle, seat upholstery, head rests or the like, comprising the steps of
- inserting a textile product into a mould (10),
- closing the mould (10) and introducing the reaction products to form the foam,
- allowing the reaction products to react, with a simultaneous decrease in the pressure created during the reaction via at least one expansion orifice (5) in the mould half not facing the inserted product,
in such a way that none of the reaction products nor the foam created by the reaction of the reaction products penetrates the textile product, **characterized in that** the textile product is inserted without the interposition of a film or the like close to the back of the textile product, wherein the decrease in pressure is controlled so that the degree of opening of a valve (27) associated with the expansion orifice (5) toward a reduced pressure source (12, 13) is regulated.

2. Method according to claim 1, **characterised in that** the degree of opening of the valve (27) associated with the expansion orifice (5) is regulated as a function of the progress of the reaction in the mould.

3. Method according to claim 2, **characterised in that** the pressure characteristic at the expansion orifice (9) is detected and the degree of opening as a function thereof and feeding back of product-typical parameters, in particular the capillary forces of the components of the textile product, are regulated.

4. Method according to any one of the preceding claims, **characterised in that**, once foaming has started on the back of the textile product inserted into the mould (10), the decrease in pressure is further regulated in such a way that any air (25) present in the region of the useful or visible face of the textile product in the mould (10) is extracted through the textile product and, in the process, opens cells in the foam already formed therein.

5. Back-foamed air-permeable textile product such as a back-foamed mat as a floor covering for a motor vehicle, seat upholstery, head rest or the like, in which the cells of the foam adhere tightly to the back of the textile product without the interposition of a film or the like and without the foam penetrating the textile product **characterised in that** the cells directly adjacent to the back of the textile product are opened to a greater extent than the foam cells adjacent thereto.

6. Device for producing air-permeable textile products such as a back-foamed mat as a floor covering for a motor vehicle, seat upholstery, head rest or the like, comprising a mould (10) with an upper mould region (10a), and with at least one expansion orifice (5) at a predetermined position in the upper portion of the upper mould region (10a), **characterised in that** each expansion orifice (5) is allocated a control valve (27) which provides a controllable connection to a reduced pressure source (12, 13) and that a control unit (19; 22) is configured to control said at least one control valve (27), as a function of product parameters (17) and detected actual values (18, 21), to perform the method of one of claims 1 to 4.

7. Device according to claim 6, **characterised in that** a plurality of expansion orifices (5) are provided at targeted positions of the mould (10), each of which is allocated a control valve (27), each control valve (27) being able to be supplied with reduced pressure from a common media supply and each of the control valves (27) being individually controllable.

8. Device according to any one of claims 6 to 7, **characterised in that** the expansion orifice (5) is configured as a capillary containing a needle valve (1) which closes the expansion orifice (5) when the foam reaches the expansion orifice (5).

9. Device according to any one of claims 6 to 8, **characterised in that** a pressure sensor (6) detects the pressure at the expansion orifice (5), the pressure characteristic being used as a detectable actual value (21) for regulating the decrease in pressure and optionally also for closing the needle valve (1).

## Revendications

1. Procédé de production de produits perméables à l'air et renforcés par moussage, tels que des éléments de tapis renforcés par moussage comme revêtement de sol d'un véhicule automobile, coussins, appui-tête ou autres, comprenant les étapes consistant à
placer un produit textile dans un moule (10)
fermer le moule (10) et injecter les produits réactionnels pour former la mousse,
laisser réagir les produits réactionnels en réduisant en même temps la pression générée lors de la réaction par au moins une ouverture d'expansion (5) dans la moitié du moule (10) détournée du produit placé, de telle sorte que ni les produits réactionnels ni la mousse générée par la réaction des produits réactionnels ne pénètrent dans le produit textile, **caractérisé en ce que** le produit textile est placé étroitement à la face arrière d'un produit textile sans la couche intermédiaire d'une feuille ou autre et que la réduction de pression est réglée de telle sorte que le degré d'ouverture d'une soupape (27) affectée à l'ouverture d'expansion (5) soit réglé par rapport à une source de pression négative (12, 13).

2. Procédé selon la revendication 1, **caractérisé en ce que** le degré d'ouverture de la soupape (27) affectée à l'ouverture d'expansion (5) est réglé en fonction de l'évolution de la réaction dans le moule (10).

3. Procédé selon la revendication 2, **caractérisé en ce que** l'évolution de la pression au niveau de l'ouverture d'expansion (5) est détectée et le degré d'ouverture est réglé en fonction de celle-ci et de l'inversion de paramètres typiques du produit, en particulier, la force de capillarité des composants du produit textile.

4. Procédé selon l'une des revendications précédentes, **caractérisé en ce que**, après le début de la formation de mousse sur l'arrière du produit textile placé dans le moule (10), la réduction de pression est en outre réglée de telle sorte que dans la zone du côté utile ou du côté visible du produit textile dans le moule (10), de l'air présent (25) soit aspiré au travers du produit textile par ouverture de cellules dans la mousse déjà formée.

5. Produit perméable à l'air, renforcé par moussage tel qu'un élément de tapis renforcé par moussage comme revêtement de sol d'un véhicule automobile, coussins, appui-tête ou autres, dans lequel les cellules de la mousse adhèrent étroitement à la face arrière d'un produit textile sans la couche intermédiaire d'une feuille ou autre, sans que la mousse ne pénètre au travers,
**caractérisé en ce que** les cellules raccordées immédiatement à la face arrière du produit textile sont ouvertes en quantité supérieure par rapport aux cellules de mousse adjacentes.

6. Dispositif de production d'un produit perméable à l'air, renforcé par moussage tel que des éléments de tapis renforcés par moussage comme revêtement de sol d'un véhicule automobile, coussins, appui-tête ou autres, avec un moule (10) comportant une zone de moule supérieure (10a) et au moins une ouverture d'expansion (5) sur un site prédéterminé dans la partie supérieure de la zone de moule supérieure (10a) **caractérisé en ce qu'**à chaque ouverture d'expansion (5) est affectée une soupape de régulation (27) qui produit un raccordement réglable avec une source de pression négative (12, 13) et qu' une commande (19, 22) est conçue en fonction des paramètres du produit (17) et des valeurs réelles détectées (18, 21), pour commander au moins une soupape de régulation (27) pour la réalisation du procédé selon les revendications 1 à 4.

7. Dispositif selon la revendication 6, **caractérisé en ce que** plusieurs ouvertures d'expansion (5) sont prévus sur des sites ciblés du moule (10) auxquels une soupape de régulation (27) est affectée respectivement, chaque soupape de régulation (27) pouvant être alimentée en pression négative à partir d'un dispositif d'alimentation de milieu commun et chacune des soupapes de régulation (27) pouvant être commandée individuellement.

8. Dispositif selon l'une des revendications 6 à 7, **caractérisé en ce que** l'ouverture d'expansion (5) est conçue comme un capillaire qui contient une valve à pointeau (1) qui ferme l'ouverture d'expansion (5) lorsque la mousse atteint l'ouverture d'expansion (5).

9. Dispositif selon l'une des revendications 6 à 8, **caractérisé en ce qu'**un capteur de pression (6) détecte la pression au niveau de l'ouverture d'expansion (5), son évolution en tant que valeur réelle détectée (21) pour la régulation de la réduction de pression et éventuellement utilisée également pour la fermeture de la soupape à pointeau (1).
